(19) Europäisches Patentamt / European Patent Office / Office européen des brevets

(11) **EP 4 418 041 A1**

(12) **EUROPEAN PATENT APPLICATION**
published in accordance with Art. 153(4) EPC

(43) Date of publication:
**21.08.2024 Bulletin 2024/34**

(21) Application number: **23773472.8**

(22) Date of filing: **08.02.2023**

(51) International Patent Classification (IPC):
**G03B 27/16** (2006.01)

(52) Cooperative Patent Classification (CPC):
Y02B 20/40

(86) International application number:
**PCT/CN2023/074902**

(87) International publication number:
**WO 2023/179221 (28.09.2023 Gazette 2023/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.03.2022 CN 202210299334**

(71) Applicant: **Kaiware (Shenzhen) Technology Co., Ltd.**
**Nanshan Shenzhen, Guangdong 518000 (CN)**

(72) Inventor: **LIU, Guoliang**
**Shenzhen, Guangdong 518000 (CN)**

(74) Representative: **Oak & Fox**
**94, rue La Fayette / Esc. D**
**75010 Paris (FR)**

(54) **ILLUMINATION SPECTRUM GENERATION METHOD AND APPARATUS, SPECTRUM MATCHING METHOD AND APPARATUS, AND DEVICE AND MEDIUM**

(57) The present application provides an illumination spectrum generation method and apparatus, an illumination spectrum matching method and apparatus, a device and a medium, which belongs to the technical field of illumination. The illumination spectrum generation method includes: performing, by means of a preset HSB color model, primary color classification on to-be-matched HSB information to determine uniquely corresponding primary color information; forming a color sample set from a plurality of color samples of the primary color information; collecting sample parameters corresponding to the color sample set to obtain a first spectral power distribution function; acquiring a second spectral power distribution function under a fitting light source, and a preset regression function threshold; performing similarity fitting on the first spectral power distribution function and the second spectral power distribution function to obtain a similarity value; and performing similarity judgment on the similarity value to determine an illumination spectrum formulation uniquely corresponding to the primary color information. In the present application, spectrum matching is performed on HSB information by means of established spectrum formulation library and spectrum matching rule library, so as to determine a unique and high-quality illumination spectrum formulation for an illuminated object.

Acquire a preset HSB color model, and perform, by means of the HSB color model, primary color classification on to-be-matched HSB information to determine primary color information uniquely corresponding to the HSB information — S110

Obtain, according to the HSB color model, a plurality of color samples corresponding to the primary color information, and form a color sample set from the plurality of color samples — S120

Acquire, by means of a color sampling apparatus, sample parameters corresponding to the color sample set, where the sample parameters include a first spectral power distribution function corresponding to the color sample set — S130

Acquire a second spectral power distribution function under a fitting light source, and a preset regression function threshold — S140

Perform, by using a regression function, similarity fitting on the first spectral power distribution function and the second spectral power distribution function to obtain a similarity value — S150

Perform, according to the regression function threshold, similarity judgment on the similarity value, so as to determine, from a preset spectrum formulation library, an illumination spectrum formulation uniquely corresponding to the primary color information — S160

FIG. 1

**Description**

**TECHNICAL FIELD**

The present application relates to the technical field of illumination, and in particular to an illumination spectrum generation method and apparatus, an illumination spectrum matching method and apparatus, a device and a medium.

**BACKGROUND**

In actual illumination scenarios, different illumination spectra are selected for different illuminated objects, to render the whole illumination environment more realistic, thereby better presenting the illuminated objects and aligning the overall illumination environment with people's expectations. For example, in an illumination application in the field of clothing, it is suggested using an illumination spectrum with a color temperature of 3500K for men's clothing, a color temperature of 3000K with a slight bias towards white for women's clothing, and a color temperature of 3200K for children's clothing. In addition, in an illumination application in a supermarket area, an illumination spectrum with a color temperature of 1800K should be adopted for a beef area, and an illumination spectrum with a color temperature of 3500K with a slight bias towards red should be adopted for areas such as vegetables and fruits area. This approach ensures better representation of the illuminated objects.

However, many supermarkets and malls currently, due to their own limitations or the inadequate professionalism of illumination designers, tend to use a fixed illumination spectrum formulation for different colors of clothing or meat. Consequently, customers often experience significant color discrepancies between items seen at home and those observed in the supermarkets or malls after purchase. This not only fails to restore the true colors of the illuminated objects and highlight the value of the goods, but also diminishes the customers' purchase desire as well.

**SUMMARY**

The main objective of the embodiments of the present application is to propose an illumination spectrum generation method and apparatus, an illumination spectrum matching method and apparatus, a device and a medium. Spectrum matching can be performed on HSB information of an illuminated object by means of established spectrum formulation library and spectrum matching rule library, so as to determine a unique and high-quality illumination spectrum formulation for the illuminated object.

In order to achieve the above objective, embodiments in a first aspect of the present application propose an illumination spectrum generation method, including:

acquiring a preset HSB color model, and performing, by means of the HSB color model, primary color classification on to-be-matched HSB information to determine primary color information uniquely corresponding to the HSB information;

obtaining, according to the HSB color model, a plurality of color samples corresponding to the primary color information, and forming a color sample set from the plurality of color samples;

collecting, by means of a color sampling apparatus, sample parameters corresponding to the color sample set, where the sample parameters include a first spectral power distribution function corresponding to the color sample set;

acquiring a second spectral power distribution function under a fitting light source, and a preset regression function threshold;

performing, by using a regression function, similarity fitting on the first spectral power distribution function and the second spectral power distribution function to obtain a similarity value; and

performing, according to the regression function threshold, similarity judgment on the similarity value, so as to determine, from a preset spectrum formulation library, an illumination spectrum formulation uniquely corresponding to the primary color information.

In some embodiments, the method further includes:

acquiring a mapping relationship between primary color information and formulation color blocks in the spectrum formulation library; and

determining, according to the mapping relationship between the primary color information and the formulation color blocks, a formulation color block uniquely corresponding to the primary color information corresponding to the HSB information.

In some embodiments, the performing, by using a regression function, similarity fitting on the first spectral power distribution function and the second spectral power distribution function to obtain a similarity value includes:

acquiring the first spectral power distribution function and first hue information corresponding to the first spectral power distribution function;

acquiring the second spectral power distribution function and second hue information corresponding to the second spectral power distribution function;

performing hue judgment on the first hue information and the second hue information to obtain a hue comparison result;

establishing a functional relationship between the first spectral power distribution function and the second spectral power distribution function to obtain fitting ratio information of the fitting light source;

adjusting, according to the hue comparison result, the functional relationship to update the fitting ratio information; and

performing, by using a regression function, similarity fitting on the first spectral power distribution function and the second spectral power distribution function to obtain a similarity value.

In some embodiments, the performing, according to the regression function threshold, similarity judgment on the similarity value, so as to determine, from a preset spectrum formulation library, an illumination spectrum formulation uniquely corresponding to the primary color information includes:

performing similarity judgment on the regression function threshold and the similarity value; and

determining, if the similarity value is greater than the regression function threshold, an illumination spectrum formulation uniquely corresponding to the primary color information from the preset spectrum formulation library according to the fitting ratio information.

In some embodiments, the obtaining, according to the HSB color model, a plurality of color samples corresponding to the primary color information, and forming a color sample set from the plurality of color samples includes:

performing, according to the HSB color model, tone classification on the primary color information to obtain a primary color tone uniquely corresponding to the primary color information, where the primary color tone includes any of a cold tone, a neutral tone, or a warm tone;

making, according to the primary color tone corresponding to the primary color information, a plurality of color samples corresponding to the primary color information, where the color samples are each made of different materials and have different reflection coefficients; and

forming a color sample set from the plurality of color samples.

Embodiments in the second aspect of the present application propose an illumination spectrum matching method, including:

performing color sampling on a to-be-matched illuminated object to obtain HSB information of the illuminated object;

acquiring a spectrum matching rule library established according to color matching rules;

acquiring the spectrum formulation library in the method according to any of the embodiments in the first aspect of the present application; and

performing, according to the spectrum matching rule library and the spectrum formulation library, spectrum matching on the HSB information to determine an illumination spectrum formulation uniquely corresponding to the HSB information.

Embodiments in a third aspect of the present application propose an illumination spectrum generation apparatus, including:

a primary color acquisition module, configured to acquire a preset HSB color model and perform, by means of the HSB color model, primary color classification on to-be-matched HSB information to determine primary color information uniquely corresponding to the HSB information;

a sample set construction module, configured to obtain, according to the HSB color model, a plurality of color samples corresponding to the primary color information, and form a color sample set from the plurality of color samples;

a first parameter acquisition module, configured to acquire, by means of a color sampling apparatus, sample parameters corresponding to the color sample set, where the sample parameters include a first spectral power distribution function corresponding to the color sample set;

a second parameter acquisition module, configured to acquire a second spectral power distribution function under a fitting light source, and a preset regression function threshold;

a similarity fitting module, configured to perform, by using a regression function, similarity fitting on the first spectral power distribution function and the second spectral power distribution function to obtain a similarity value; and

a spectrum formulation generation module, configured to perform, according to the regression function threshold, similarity judgment on the similarity value, so as to determine, from a preset spectrum formulation library, an illumination spectrum formulation uniquely corresponding to the primary color information.

Embodiments in a fourth aspect of the present application propose an illumination spectrum matching apparatus, including:

an HSB information acquisition module, configured to perform color sampling on a to-be-matched illuminated object to obtain HSB information of the illuminated object;

a matching rule library acquisition module, configured to acquire a spectrum matching rule library established according to color matching rules;

a spectrum formulation library acquisition module, configured to acquire the spectrum formulation library in the method according to any of the embodiments in the first aspect of the present application; and

a spectrum matching module, configured to perform, according to the spectrum matching rule library and the spectrum formulation library, spectrum matching on the HSB information to determine an illumination spectrum formulation uniquely corresponding to the HSB information.

Embodiments in a fifth aspect of the present application propose a computer device, including a memory and a processor, where the memory is configured to store a computer program which, when executed by the processor, causes the processor to perform:

the illumination spectrum generation method in any of the embodiments in the first aspect of the present application; or

the illumination spectrum matching method in any of the embodiments in the second aspect of the present application.

Embodiments in a sixth aspect of the present application proposes a computer-readable storage medium, storing a computer program which, when executed by a computer, causes the computer to perform:

the illumination spectrum generation method in any of the embodiments in the first aspect of the present application; or

the illumination spectrum matching method in any of the embodiments in the second aspect of the present application.

According to the illumination spectrum generation method and apparatus, the illumination spectrum matching method and apparatus, the device and the medium proposed in the embodiments of the present application, by acquiring a preset HSB color model and performing, by means of the HSB color model, primary color classification on to-be-matched HSB information, primary color information uniquely corresponding to the HSB information is determined. A plurality of color samples corresponding to the primary color information are obtained according to the HSB color model, and a color sample set is formed from the plurality of color samples. Then, sample parameters corresponding to the color sample set are collected by means of a color sampling apparatus, where the sample parameters include a first spectral power distribution function corresponding to the color sample set. A second spectral power distribution function under a fitting light source and a preset regression function threshold are acquired, and by using a regression function, similarity fitting is performed on the first spectral power distribution function and the second spectral power distribution function to obtain a similarity value. According to the regression function threshold, similarity judgment is performed on the similarity value, so as to determine, from a preset spectrum formulation library, an illumination spectrum formulation uniquely corresponding to the primary color information. In the present application, spectrum matching can be performed on HSB information of an illuminated object by means of established spectrum formulation library and spectrum matching rule library, so as to determine a unique and high-quality illumination spectrum formulation for the illuminated object, thus the illuminated object can be better exhibited according to the illumination spectrum formula.

**BRIEF DESCRIPTION OF DRAWINGS**

FIG. 1 is a flowchart of an illumination spectrum generation method provided in an embodiment of the present application;

FIG. 2 is a flowchart of an illumination spectrum generation method provided in another embodiment of the present application;

FIG. 3 is a flowchart of step S150 in FIG. 1;

FIG. 4 is a flowchart of step S120 in FIG. 1;

FIG. 5 is a flowchart of an illumination spectrum matching method provided in an embodiment of the present application;

FIG. 6 is a detailed schematic diagram of corresponding information between an HSB information data range and a spectrum formulation library and formulation color block information, provided in an embodiment of the present application;

FIG. 7 is a detailed schematic diagram of the spectrum formulation library and corresponding formulation color block areas within a CIE chromaticity coordinate range, provided in an embodiment of the present application; and

FIG. 8 is a schematic diagram of a hardware structure of a computer device provided in an embodiment of the present application.

**DETAILED DESCRIPTION**

In order to make the objective, technical solution and advantages of the present application clearer, the present application will be further described in detail below with reference to the accompanying drawings and embodiments. It should be understood that the specific embodiments described herein are merely intended to explain the present application rather than limit the present application.

It should be noted that although functional modules have been classified in the apparatus schematic diagram and logical orders have been exhibited in the flowcharts, in some cases, the steps exhibited or described may be executed different from the module classification in the apparatus or the orders in the flowcharts. The terms "first", "second" and the like in the specification, the claims and the above accompanying drawings are used to distinguish similar objects, and are not necessarily used to describe a specific order or sequence.

Unless otherwise defined, the meanings of all the technical and scientific terms used herein are the same as those understood normally by those of ordinary skills in the art to which the present application belongs. The terms used herein are only for the purpose of describing the embodiments of the present application, and are not intended to limit the present application.

HSB (Hue-Saturation-Brightness) represents a color mode (i.e., a color mode of hue (H), saturation (S) and brightness (B)), which describes three basic characteristics of colors based on the human perception of colors. The HSB color mode involves representation using three attributes of colors, and quantifies the three attributes of colors by representing saturation (S) and brightness (B) as percentages (0% to 100%) and hue as an angle (0° to 360°). Saturation (S) represents the purity of colors, with zero saturation resulting in gray. White, black and other gray-scale colors have zero saturation, and the greater the saturation, the purer the colors. Brightness (B) refers to the brightness of colors, with zero brightness resulting in black and the maximum brightness representing the most vivid color state.

In actual illumination scenarios, different illumination spectra are selected for different illuminated objects, to render the whole illumination environment more realistic, thereby better presenting the illuminated objects and aligning the overall illumination environment with people's expectations. For example, in an illumination application in the field of clothing, it is suggested using an illumination spectrum with a color temperature of 3500K for men's clothing, a color temperature of 3000K with a slight bias towards white for women's clothing, and a color temperature of 3200K for children's clothing. In addition, in an illumination application in a supermarket area, an illumination spectrum with a color temperature of 1800K should be adopted for a beef area, and an illumination spectrum with a color temperature of 3500K with a slight bias towards red should be adopted for areas such as vegetables and fruits area. This approach ensures better representation of the illuminated objects.

However, many supermarkets and malls currently, due to their own limitations or the inadequate professionalism of illumination designers, tend to use a fixed illumination spectrum formulation for different colors of clothing or meat. Consequently, customers often experience significant color discrepancies between items seen at home and those observed in the supermarkets or malls after purchase. This not only fails to restore the true colors of the illuminated objects and highlight the value of the goods, but also diminishes the customers' purchase desire as well.

Based on this, the main objective of the embodiments of the present application is to propose an illumination spectrum generation method and apparatus, an illumination spectrum matching method and apparatus, a device and a medium. Illumination spectrum formulations for illuminated objects of different colors can be efficiently and accurately determined by establishing a spectrum formulation library and a spectrum matching rule library, so as to better exhibit the illuminated objects according to the illumination spectrum formulas.

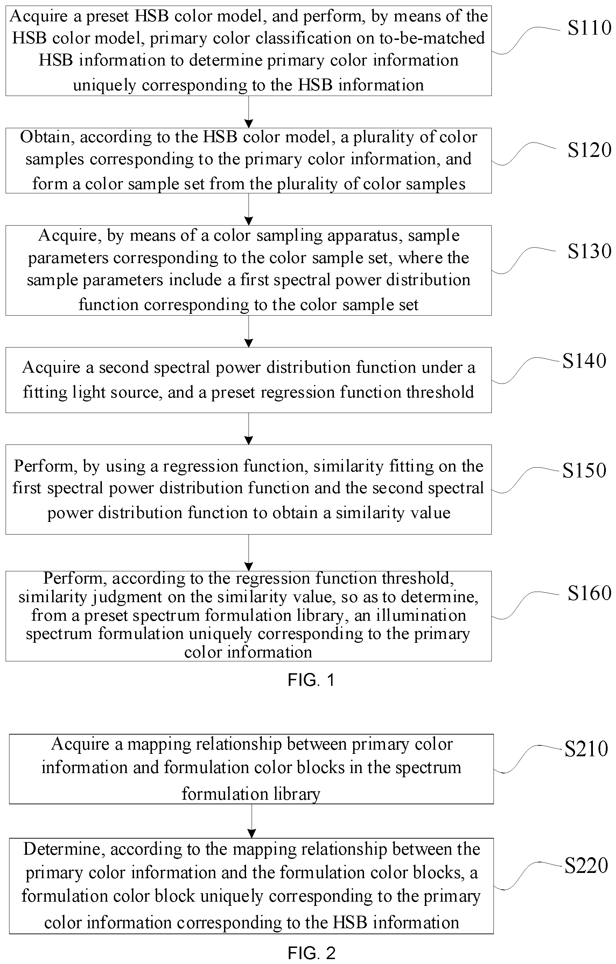

Referring to FIG. 1, the illumination spectrum generation method according to the embodiments in the first aspect of the present application includes, but is not limited to, step S110 to step S160.

In step S110, a preset HSB color model is acquired, and primary color classification is performed on to-be-matched HSB information by means of the HSB color model to determine primary color information uniquely corresponding to the HSB information.

In step S120, a plurality of color samples corresponding to the primary color information are obtained according to the HSB color model, and a color sample set is formed from the plurality of color samples.

In step S130, sample parameters corresponding to the color sample set are collected by means of a color sampling apparatus, where the sample parameters include a first spectral power distribution function corresponding to the color sample set.

In step S140, a second spectral power distribution function under a fitting light source and a preset regression function threshold are acquired.

In step S150, by using a regression function, similarity fitting is performed on the first spectral power distribution function and the second spectral power distribution function to obtain a similarity value.

In step S160, according to the regression function threshold, similarity judgment is performed on the similarity value, so as to determine, from a preset spectrum formulation library, an illumination spectrum formulation uniquely corresponding to the primary color information.

In step S110, the preset HSB color model is acquired, and to-be-matched HSB information is defined by means of the HSB color model. Specifically, the preset HSB color model is established according to an HSB color mode, a corresponding range (i.e., HSB information used to define a target color) of the color of a to-be-matched illuminated object is defined according to the HSB color model, and then the primary color information uniquely corresponding to the HSB information is determined, which is denoted as primary color s.

It should be noted that when color sampling is performed on the to-be-matched illuminated object, different color parameter forms may be obtained due to different sampling devices. However, by converting different color parameter forms into an equivalent form of HSB information, primary color classification can be performed on to-be-matched HSB information by means of the HSB color model, so as to determine a primary color s uniquely corresponding to the HSB information. Specifically, when color parameters are acquired by sampling devices such as a sensor, the forms of the color parameters include numerical forms represented by different color model forms such as RGB (Red-Green-Blue), HSL (Hue-Saturation-Lightness), HSV (Hue-Saturation-Value), YUV (Luminance-Chrominance), and RAW (data processed by an image sensor), and then the different forms of color parameters acquired can be converted into equivalent HSB information corresponding to the HSB color mode. In addition, the color parameters may also include a reflection spectrum distribution function, a pixel value, a RGB value, an HSB value of a primary color object.

In step S120, in order to acquire the sample parameters corresponding to the target color more accurately and comprehensively, a plurality of color samples corresponding to the primary color information are obtained according to the HSB color model, and a color sample set is formed from the plurality of color samples.

In step S130, sample parameters corresponding to the color sample set are acquired by means of a color sampling apparatus, where the sample parameters include a first spectral power distribution function $f_s$ corresponding to the color sample set. Specifically, the color sampling apparatus includes a radiation spectrometer, an integrating sphere (darkroom), standard light sources, and sampling software. It should be noted that the present application is not limited to the above color sampling apparatus, and color sampling apparatuses with the same color sampling function are also applicable to the present application, which will not be repeated here.

It should be noted that the sample parameters corresponding to the color sample set are acquired by the color sampling apparatus. Specifically, after a plurality of color samples corresponding to each primary color s are put into, for example, an integrating sphere with a R98 reflection coefficient, the standard light sources, integrating sphere and radiation spectrometer are placed, the integrating sphere is connected to the radiation spectrometer, and the spectral radiometer needs to be separated by a baffle, so as to prevent the light of the standard light sources from directly entering a probe. In order to avoid the strong reflection of light, the integrating sphere needs to be as large as possible, and the standard light sources do not directly illuminate the color samples, but illuminate the color samples at an angle of 15 degrees with the color samples.

In step S140 to step S160, the second spectral power distribution function $f_c$ under the fitting light source and the preset regression function threshold are acquired, and similarity fitting is performed on the first spectral power distribution function and the second spectral power distribution function by using the regression function. That is, by establishing a functional relationship between the first spectral power distribution function $f_s$ and the second spectral power distribution function $f_c$, the functional relation is solved to obtain the similarity value. Then, according to the preset regression function threshold, similarity judgment is performed on the similarity value, so as to determine, from the preset spectrum formulation library, an illumination spectrum formulation uniquely corresponding to the primary color information. It should be noted that by determining an illumination spectrum formulation uniquely corresponding to the primary color information from the preset spectrum formulation library, a mapping relationship between the primary color information and the corresponding illumination spectrum formulation in the spectrum formulation library is established, that is, the spectrum formulation library is constructed according to a plurality of illumination spectrum formulations acquired.

It should be noted that after a primary color s uniquely corresponding to the to-be-matched HSB information is determined, hue classification is performed on each primary color s according to hue (H), saturation (S) and brightness (B) in the HSB information, and the hue is specifically classified as any of a cold tone (cw), a neutral tone (nw), and a warm tone (ww), that is, the primary color s has a uniquely corresponding primary color tone. Then, according to the defined cold tone (cw), neutral tone (nw) and warm tone (ww), standard light sources which accord with the three tones are defined, i.e., a light source A, a light source U35 and a light source D50. In order to significantly eliminate color errors caused by the inconsistence between the individual light sources and the primary color tones, corresponding light source weights are established for the light sources with different tones, as shown in Table 1, and the most accurate reflection spectrum curve function $f_r$ for the primary colors s is acquired according to light source weighted proportions of the primary color tones combined with the different primary colors s under the different standard light sources. In order to perform spectrum fitting more effectively, the curve of the reflection spectrum curve function $f_r$ acquired is intercepted with the wavelength ranging from 380nm to 780nm, and the intercepted curve is normalized to obtain a curve of the first spectral power distribution function $f_s$.

Table 1

| Primary Color Tone | Light Source A | Light Source U35 | Light Source D50 |
|---|---|---|---|
| warm tone (ww) | 0.7 | 0.2 | 0.1 |
| neutral tone (nw) | 0.2 | 0.6 | 0.2 |
| cold tone (cw) | 0.1 | 0.2 | 0.7 |

It should be noted that the fitting light source may emit monochromatic light, compound light, and any combination of monochromatic light and compound light, and may be independently controlled and include more than two types of light sources, and a main wavelength of the fitting light source is between 350nm and 780nm. In addition, the fitting light source at least contains a compound white light with a color temperature ranging from 1000K to 10000K, a main wavelength ranging from 350nm to 780nm, and a corresponding Ra color rendering index ranging from 0 and 100. Moreover, the shape and arrangement of the fitting light source may include any of staggering, interleaving, embedding or irregular free distribution. The package type of the fitting light source may be SMD, COB and any other types of packages or any combination of packages.

It should be noted that the spectrum formulation library may cover HSB information applicable to all illuminated objects including single colors and multiple colors.

In some embodiments, as shown in FIG. 2, the illumination spectrum generation method according to the embodiment of the present application further includes, but is not limited to, step S210 and step S220.

In step S210, a mapping relationship between primary color information and formulation color blocks in the spectrum formulation library is acquired.

In step S220, according to the mapping relationship between the primary color information and the formulation color blocks, a formulation color block uniquely corresponding to the primary color information corresponding to the HSB information is determined.

Specifically, in some embodiments, the mapping relationship between the primary color information and the formulation color blocks in the spectrum formulation library is acquired, where there is a mapping relationship between the primary color information and a corresponding illumination spectrum formulation in the spectrum formulation library, and each illumination spectrum formulation in the spectrum formulation library is represented in the form of a formulation color block, that is, there is a mapping relationship between corresponding HSB information and formulation color blocks. According to the mapping relationship between the primary color information and the formulation color blocks, a formulation color block uniquely corresponding to the primary color information corresponding to the to-be-matched HSB information is determined.

It should be noted that color block classification is performed on the spectrum formulation library to obtain formulation color blocks each corresponding to a respective illumination spectrum formula, and the formulation color block uniquely corresponds to the primary color information. Specifically, color block classification is performed on the obtained spectrum formulation library, that is, the combination of a central point of CIE chromaticity coordinates (x/y) and a Macadam's ellipse is adopted as a range for the classification of the color blocks of the spectrum formulation library, so as to obtain the formulation color blocks each corresponding to a respective illumination spectrum formulation, and then a mapping relationship is formed between the to-be-matched HSB information and the formulation color blocks in the spectrum formulation library, thereby obtaining a corresponding relationship between colors of to-be-matched illuminated objects and the formulation color blocks in the spectrum formulation library.

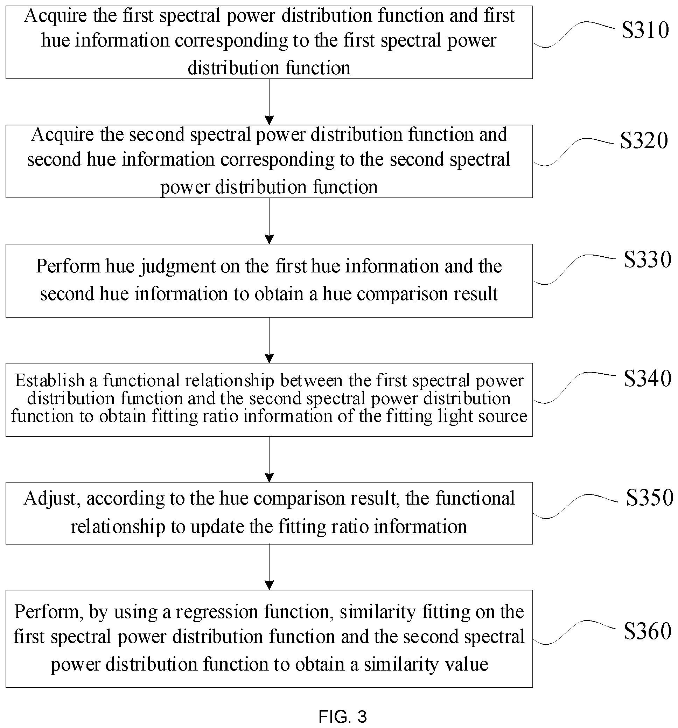

In some embodiments, as shown in FIG. 3, step S150 specifically includes, but is not limited to, step S310 to step S360.

In step S310, the first spectral power distribution function and first hue information corresponding to the first spectral power distribution function are acquired.

In step S320, the second spectral power distribution function and second hue information corresponding to the second spectral power distribution function are acquired.

In step S330, hue judgment is performed on the first hue information and the second hue information to obtain a hue comparison result.

In step S340, a functional relationship between the first spectral power distribution function and the second spectral power distribution function is established to obtain fitting ratio information of the fitting light source.

In step S350, according to the hue comparison result, the functional relationship is adjusted to update the fitting ratio information.

In step S360, by using a regression function, similarity fitting is performed on the first spectral power distribution function and the second spectral power distribution function to obtain a similarity value.

In step S310 to step S330, the first spectral power distribution function $f_s$ and first hue information corresponding to the first spectral power distribution function are acquired, and the second spectral power distribution function $f_c$ and second hue information corresponding to the second spectral power distribution function are acquired. Specifically, the first hue information (such as a correlated color temperature CCT, chromaticity coordinates, a color gamut index $R_g$ and a fidelity index $R_f$) of the first spectral power distribution function $f_s$ is obtained according to the uniform color space and color difference formula of reference standards GB-T 7921-2008 and GB5820-2003, and the second spectral power distribution function $f_c$ and second hue information corresponding to the second spectral power distribution function are obtained according to IES TM-30-18 (Method for Evaluating Light Source Color Rendition). Therefore, hue judgment is performed on the acquired first hue information and second hue information to obtain a hue comparison result.

In step S340, a functional relationship between the first spectral power distribution function $f_s$ and the second spectral power distribution function $f_c$ is established to obtain fitting ratio information of the fitting light source. Specifically, assuming that there are n independent fitting light sources for spectrum fitting (n is a positive integer), spectral power distributions $f_1$, $f_2$ ... $f_n$ of the fitting light sources are tested by the radiation spectrometer, and then the second spectral power distribution function $f_c$ is used to represent a spectral power distribution function for the n fitting light sources subsequent to fitting. The specific way is to acquire a plurality of typical peaks of the first spectral power distribution function $f_s$, that is, assuming that there are z typical peaks (z is a positive integer), and letting $f_{s1}$, $f_{s2}$ ... $f_{sz}$ represent

values of the first typical peak to the z-th typical peak respectively, as shown in Formula (1), a plurality of relations in Formula (1) are solved to obtain z groups of values from $c_{s11}, c_{s12} ... c_{s1n}, c_{s21}, c_{s22}... c_{s2n}$ to $c_{sz1}, c_{sz2} ... c_{szn}$, and then an average value of each of the z groups of values from $c_{s11}, c_{s12} ... c_{s1n}, c_{s21}, c_{s22} ... c_{s2n}$ to $c_{sz1}, c_{sz2} ... c_{szn}$ is calculated, so that light flux proportion values $c_1, c_2.... c_n$ representing the n independent fitting light sources are obtained. A functional relationship between the first spectral power distribution function $f_s$ and the second spectral power distribution function $f_c$ is then established according to Formula (2), thus obtaining fitting ratio information of the fitting light sources.

$$\begin{cases} f_{s1} = c_{s11} * f_1 + c_{s12} * f_2 + c_{s13} * f_3 ... + c_{s1n} * f_n \\ f_{s2} = c_{s21} * f_1 + c_{s22} * f_2 + c_{s23} * f_3 ... + c_{s2n} * f_n \\ \quad\quad\quad\quad\quad\quad \vdots \\ f_{sz} = c_{sz1} * f_1 + c_{sz2} * f_2 + c_{sz3} * f_3 ... + c_{szn} * f_n \end{cases}$$

$$(1)$$

$$f_s \approx f_c = c_1 * f_1 + c_2 * f_2 + c_3 * f_3 ... + c_n * f_n \qquad (2)$$

In step S350 and step S360, according to the hue comparison result, the functional relationship is adjusted to update the fitting ratio information, and by using the regression function, similarity fitting is performed on the first spectral power distribution function $f_s$ and the second spectral power distribution function $f_c$ to obtain a similarity value. Specifically, if the hue comparison result between the first hue information and the second hue information indicates a great difference, it is necessary to adjust a cardinal number of the typical peaks z in the fitting light sources for spectrum fitting, so as to update the fitting ratio information corresponding to the fitting light sources. For example, if the hue comparison result between the first hue information and the second hue information indicates a great difference and the obtained similarity value is less than or equal to the preset regression function threshold, it is necessary to increase the cardinal number of the typical peaks z, i.e. increasing the number of the typical peaks z, until the similarity value is greater than the preset regression function threshold. However, when the cardinal number of the typical peaks z has become very large, it is necessary to increase a cardinal number n of the independent fitting light sources in spectrum fitting until the similarity value is greater than the preset regression function threshold.

In some embodiments, step S160 specifically includes: performing similarity judgment on the regression function threshold and the similarity value, and determining, if the similarity value is greater than the regression function threshold, an illumination spectrum formulation uniquely corresponding to the primary color information from the preset spectrum formulation library according to the fitting ratio information.

Specifically, by establishing the functional relationship between the first spectral power distribution function $f_s$ and the second spectral power distribution function $f_c$, the functional relation is solved to obtain a similarity value. In order to better verify the similarity between the first spectral power distribution function $f_s$ and the second spectral power distribution function $f_c$, similarity judgment is performed on the regression function threshold and the similarity value. If the similarity value is greater than the regression function threshold, an illumination spectrum formulation uniquely corresponding to the primary color information is determined from the preset spectrum formulation library according to the fitting ratio information. For example, assuming that the preset regression function threshold is 0.95, if the similarity value is greater than the preset regression function threshold of 0.95 and the hue comparison result indicates that the first hue information and the second hue information are less than a preset hue comparison threshold, an illumination spectrum formulation uniquely corresponding to the primary color information is obtained according to the fitting ratio information obtained by the second spectral power distribution function $f_c$.

It should be noted that the regression function used for similarity fitting between the first spectral power distribution function $f_s$ and the second spectral power distribution function $f_c$ includes a CORREL (correlation coefficient function) and a RSQ (square function of correlation coefficient), that is, obtaining a value $R$ corresponding to CORREL and a value $R^2$ corresponding to RSQ. Therefore, if the similarity value is greater than the preset regression function threshold, that is, the value $R$ corresponding to CORREL and the value $R^2$ corresponding to RSQ meet Formula (3), an illumination spectrum formulation uniquely corresponding to the primary color information is obtained according to the fitting ratio information.

$$\begin{cases} R = CORREL\left(f_c, f_s\right) > 0.95 \\ R^2 = RSQ\left(f_c, f_s\right) > 0.95 \end{cases} \tag{3}$$

It should be noted that in practical applications, in order to more accurately determine an illumination spectrum formulation corresponding to a primary color $s$, if the similarity value is greater than the preset regression function threshold of 0.95, an illumination spectrum formulation uniquely corresponding to to-be-matched primary color information can be obtained according to both experimental data about the matching between the primary color information and the spectrum formulation library and the color preference of the public based on big data statistics.

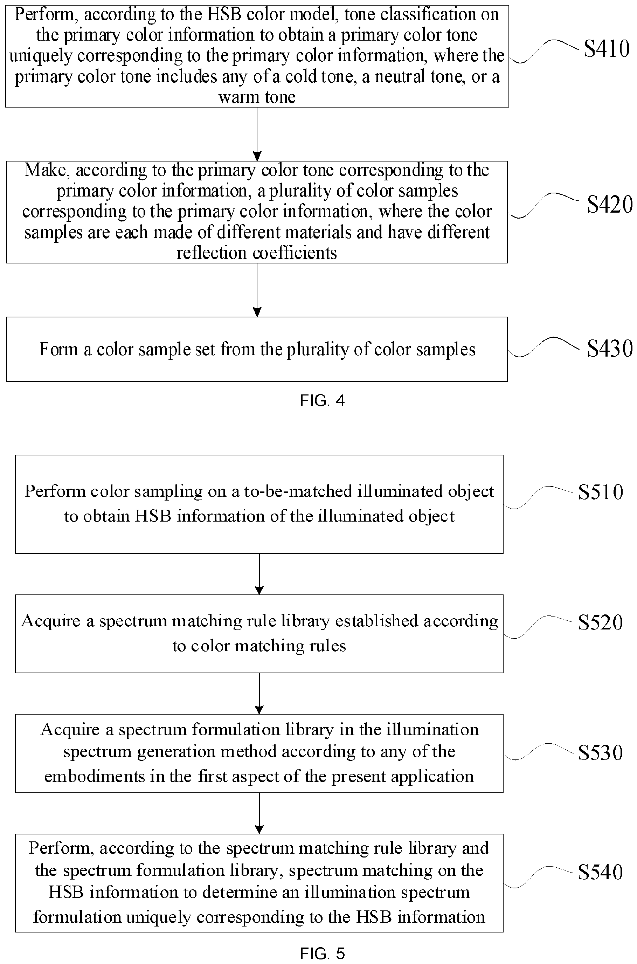

In some embodiments, as shown in FIG. 4, step S120 specifically includes, but is not limited to, step S410 to step S430.

In step S410, according to the HSB color model, tone classification is performed on the primary color information to obtain a primary color tone uniquely corresponding to the primary color information, where the primary color tone includes any of a cold tone, a neutral tone, or a warm tone.

In step S420, according to the primary color tone corresponding to the primary color information, a plurality of color samples corresponding to the primary color information are made, where the color samples are each made of different materials and have different reflection coefficients.

In step S430, a color sample set is formed from the plurality of color samples.

In step S410, in order to acquire reflection spectrum data in the color parameters more accurately, hue classification is performed on each piece of primary color information according to the HSB color model. Specifically, after the primary color information uniquely corresponding to the to-be-matched HSB information is defined, each piece of primary color information is classified as any of a cold tone (cw), a neutral tone (nw) and a warm tone (ww) according to the corresponding hue in the primary color information, that is, the primary color information has a uniquely corresponding primary color tone, that is, the to-be-matched HSB information has the uniquely corresponding primary color tone.

In step S420 and step S430, in order to acquire color parameters of the color sample set which are more accurate, more complete and more in line with actual illumination applications, a plurality of color samples made of different materials and having different reflection coefficients are made according to the primary color tone corresponding to the primary color information. Specifically, materials for making the color samples include leather, fiber, cotton, linen, silk, etc., and reflection coefficients selected according to different materials also include many types, thus a plurality of color samples corresponding to the primary color information can be acquired. Finally, a color sample set is formed according to the plurality of color samples, so that more accurate and comprehensive sample parameters of the primary color information can be acquired. In the present application, spectrum matching can be performed on the HSB information of an illuminated object by means of established spectrum formulation library and spectrum matching rule library, so as to determine a unique and high-quality illumination spectrum formulation for the illuminated object, thus the illuminated object can be better exhibited according to the illumination spectrum formulation.

Referring to FIG. 5, an embodiment of the present application further provides an illumination spectrum matching method, which is used to perform spectrum matching on an illuminated object and includes, but is not limited to, step S510 to step S540.

In step S510, color sampling is performed on a to-be-matched illuminated object to obtain HSB information of the illuminated object.

In step S520, a spectrum matching rule library established according to color matching rules is acquired.

In step S530, the spectrum formulation library in the method according to any of the embodiments in the first aspect of the present application is acquired.

In step S540, according to the spectrum matching rule library and the spectrum formulation library, spectrum matching is performed on the HSB information to determine an illumination spectrum formulation uniquely corresponding to the HSB information.

In step S510, in order to better obtain a unique and high-quality illumination spectrum formulation which accords with the illuminated object, color sampling is performed on the to-be-matched illuminated object to obtain the HSB information of the illuminated object. Specifically, because the spectrum formulation library is constructed according to an HSB color model, the main representation form of acquiring the color of the illuminated object is an HSB value. It should be noted that when color sampling is performed on the to-be-matched illuminated object, different color parameter forms may be obtained due to different sampling devices. However, by converting different color parameter forms into an equivalent form of HSB information, primary color classification can be performed on to-be-matched HSB information by means of the HSB color model, so as to determine primary color information uniquely corresponding to the HSB information. In addition, color sampling is performed on the illuminated object to obtain color parameters of the illuminated object, and the obtained color parameters include acquired pixel values, RGB value, HSB value, etc. That is, the HSB information of the illuminated object is acquired by a sensor in combination with a color selection rule, and the HSB information of the illuminated object is only one of representation forms of the color of the illuminated object.

It should be noted that the color parameters of the illuminated object acquired by the sensor may be numerical forms represented by different color models such as RGB (Red-Green-Blue), HSL (Hue-Saturation-Lightness), HSV (Hue-Saturation-Value), YUV (Luminance-Chrominance), and RAW (data processed by an image sensor), and the different forms of color parameters acquired can be converted into equivalent HSB information of the illuminated object corresponding to the HSB color mode, thus the HSB information of the illuminated object and the spectrum formulation library can be compared by means of operation according to the spectrum matching rule library, so as to obtain an illumination spectrum formulation uniquely corresponding to the primary color information of the illuminated object and a formulation color block uniquely corresponding thereto.

It should be noted that the sampling device for sampling the color parameters of the illuminated object includes a radiation spectrometer or a CMOS (Complementary Metal Oxide Semiconductor) device. However, the present application is not limited to the above color sampling devices, and color sampling devices with the same color sampling function are also applicable to the present application, which will not be repeated here.

In step S520 and step S530, the spectrum matching rule library established according to color matching rules is acquired; and the spectrum formulation library in the illumination spectrum generation method according to any of the embodiments in the first aspect of the present application is acquired. Specifically, the color matching rules include tone definition of the HSB color model, preset primary color priority definition, and preset judgment relation. When the spectrum matching rule library is established, the tone definition of the HSB color model is the same definition method as tone definition in the establishment of an HSB color model. The tone definition of the HSB color model means that defined primary color information is calibrated as any of a warm tone (ww), a neutral tone (nw), or a cold tone (cw).

It should be noted that in the process of establishment, the preset primary color priority definition and the preset judgment relation may consider the color preference based on big data statistics, actual cases and the experimental data obtained by the matching between primary color information and the spectrum formulation library, so that the spectrum matching rule library can be established according to experimental data, the tone definition of the HSB color model, the primary color priority definition and the judgment relation .

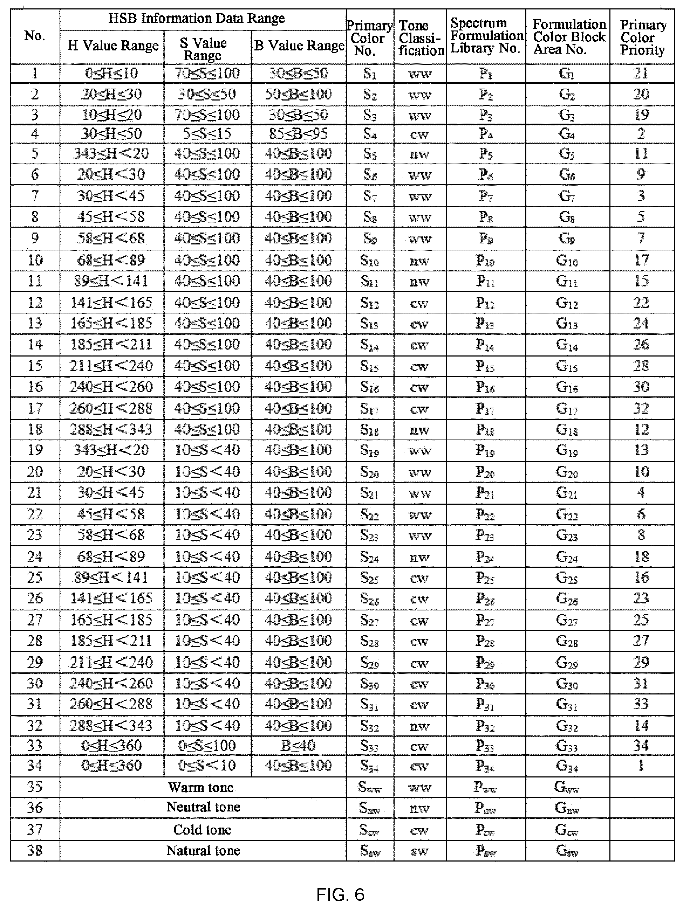

It should be noted that three attributes of colors are quantified by representing saturation (S) and brightness (B) as percentages (0% to 100%) and hue (H) as an angle (0° to 360°). In the range of hue (H), the value of 0 may coincide end to end with the value of 360, that is, 360° of hue (H) is equivalent to 0°. As shown in FIG. 5, the preset primary color priority is defined as level 1 to level 34, and decreases level by level, and a mapping relationship is formed between primary color information and formulation color blocks in the spectrum formulation library. If the constructed spectrum formulation library contains proportions of 34 primary colors, corresponding primary color number, tone classification, spectrum formulation library number, formulation color block area number and primary color priority are determined according to the data range of the HSB information of the illuminated object, where $S_1$ to $S_{34}$ denote primary color numbers, $P_1$ to $P_{34}$ denote corresponding spectrum formulation library numbers, and $G_1$ to $G_{34}$ denote formulation color block area numbers mapped with the numbers in the spectrum formulation library. Hue classification includes a warm tone (ww), a neutral tone (nw), a cold tone (cw), and a natural tone (sw). Corresponding value H, value B and value S are determined according to the obtained HSB information of the illuminated object, so that a formulation color block area corresponding to the HSB information can be searched for according to FIG. 6, thus an illumination spectrum formulation uniquely corresponding to the illuminated object can be obtained according to the spectrum formulation library. Numbers 35 to 37 in FIG. 6 are used to denote numbers and tone classification information corresponding to the warm tone (ww), neutral tone (nw), cold tone (cw) and natural tone (sw).

It should be noted that the specific steps for the judgment relation include, but are not limited to, step S521 to step S523.

In step S521, the total amount of colors in a selected area is defined as 1 first, the primary color proportions of 34 primary colors set in an image recognition area are extracted, and a proportion value of individual primary colors is calculated.

In step S522, content proportions are sorted according to the proportion value of individual primary colors to obtain the primary color $C_{max}$ with the maximum content proportion.

In step S523, the judgment relation corresponding to the spectrum matching rule library is determined according to the maximum primary color $C_{max}$.

Specifically, in some embodiments, in step S523, the maximum primary color $C_{max}$ is compared with a preset content threshold to determine a corresponding primary color number of the selected area in the spectrum formulation library. For example, when the content threshold is set as 70%, if the maximum primary color $C_{max}$ is greater than or equal to 70%, the primary color $C_{max}$ is matched to the corresponding primary color number in the spectrum formulation library, i.e., matched to one of $P_1$ to $P_{34}$; and when the content threshold is set as 70%, if the maximum primary color $C_{max}$ is less than 70%, step S5231 and step S5232 are proceeded.

In step S5231, according to a descending order result of the content proportion sorting in step S522, the first four primary colors subsequent to sorting are acquired and set as $C_1$, $C_2$, $C_3$ and $C_4$ respectively, and the total amount of $C_1$, $C_2$, $C_3$ and $C_4$ is set as 1. It should be noted that the number of the primary colors selected from the descending order result is not limited to four, and the primary colors are set as $C_1$, $C_2$ and $C_3$ correspondingly when three primary colors are selected.

In step S5232, tone classification is performed on the selected primary colors according to the calibrated warm tone (ww), neutral tone (nw) and cold tone (cw), and at the same time, proportion sorting is performed on the primary color contents in the three tones, that is, the contents corresponding to the warm tone (ww), neutral tone (nw) and cold tone (cw) are defined as $C_{ww}$, $C_{nw}$ and $C_{cw}$ respectively, and the sum of $C_{ww}$, $C_{nw}$ and $C_{cw}$ is 1.

It should be noted that in some embodiments, in step S521, when there are only two primary colors in the image recognition area, a corresponding primary color formulation is determined according to the difference between the obtained primary color $C_{max}$ with the maximum content proportion and the obtained primary color $C_{min}$ with the minimum content proportion. Specifically, assuming that a lower threshold of the difference between $C_{max}$ and $C_{min}$ is 15% and an upper threshold of the difference between $C_{max}$ and $C_{min}$ is 25%, the following three cases (1) to (3) are included.

(1) When $C_{max}-C_{min}<15\%$ is met, the primary color content proportions of $C_{ww}$, $C_{nw}$ and $C_{cw}$ are calculated respectively, and a full-spectrum matching rule for two primary colors is executed.

(2) When $15\%\leq C_{max}-C_{min}<25\%$ is met, taking color as a preferential principle, i.e., a spectrum formulation corresponding to a color with high primary color priority in the spectrum formulation library is selected for spectrum adaptation.

(3) When $C_{max}-C_{min}\geq 25\%$ is met, taking content proportion as a preferential principle, i.e., a spectrum formulation corresponding to $C_{max}$ is selected for spectrum adaptation.

The upper threshold and lower threshold of the difference between $C_{max}$ and $C_{min}$ are not specifically limited, and can be adjusted as required.

It should be noted that in some embodiments, in step S521, when there are more than two primary colors in the image recognition area, a corresponding primary color formulation is determined according to the obtained primary color $C_{max}$ with the maximum content proportion and the obtained primary color $C_2$ with the second maximum content proportion. Specifically, assuming that a lower threshold of the difference between $C_{max}$ and $C_2$ is 20% and an upper threshold of the difference between $C_{max}$ and $C_2$ is 30%, the following three cases (4) to (6) are included.

(4) When $C_{max}-C_2\geq 30\%$ is met, taking content proportion as a preferential principle, i.e., a spectrum formulation corresponding to $C_{max}$ is selected for spectrum adaptation.

(5) When $20\%\leq C_{max}-C_2<30\%$ is met and $C_{max}$ is the primary color $S_{34}$, a spectrum formulation corresponding to $P_{cw}$ is selected for spectrum adaptation; when $C_{max}$ is not the primary color $S_{34}$, the primary color content proportions of $C_{ww}$, $C_{nw}$ and $C_{cw}$ are calculated respectively, and a full-spectrum matching rule for more than two primary colors is executed.

(6) When $C_{max}-C_2<20\%$ is met and $C_{max}$ is the primary color $S_{34}$, a spectrum formulation corresponding to $P_{cw}$ is selected for spectrum adaptation; when $C_{max}$ is not the primary color $S_{34}$, the primary color content proportions of $C_{ww}$, $C_{nw}$ and $C_{cw}$ are calculated respectively, and the full-spectrum matching rule for more than two primary colors is executed.

It should be noted that full-spectrum matching rule includes a full-spectrum matching rule for two primary colors and a full-spectrum matching rule for more than two primary colors. The execution of the full-spectrum matching rule for two primary colors include the following five cases (7) to (11).

(7) When both $C_{max}$ and $C_{min}$ are the warm tone (ww), a spectrum formulation corresponding to $P_{ww}$ is selected for spectrum adaptation.

(8) When both $C_{max}$ and $C_{min}$ are the neutral tone (nw), a spectrum formulation corresponding to $P_{nw}$ is selected for spectrum adaptation.

(9) When both $C_{max}$ and $C_{min}$ are the cold tone (cw), a spectrum formulation corresponding to $P_{cw}$ is selected for spectrum adaptation.

(10) When $C_{max}$ or $C_{min}$ is the primary color $S_{33}$, a spectrum formulation of a primary color tone not corresponding to the primary color $S_{33}$ is matched. For example, when $C_{max}$ is the primary color $S_{33}$, $C_{min}$ is the primary color $S_{30}$ and a primary color tone corresponding to the primary color $S_{30}$ is the cold tone (cw), a spectrum formulation corresponding to $P_{cw}$ is selected for spectrum adaptation.

(11) When $C_{max}$ and $C_{min}$ do not meet the above rule conditions (7) to (10), a spectrum formulation corresponding to $P_{sw}$ is selected for spectrum adaptation.

The execution of the full-spectrum matching rule for more than two primary colors includes the following two cases (12) and (13).

(12) When the primary color content proportion corresponding to any of $C_{ww}$, $C_{nw}$ and $C_{cw}$ exceeds 50%, a spectrum formulation corresponding to the primary color tone of the primary color with the maximum primary color content proportion is selected for spectrum adaptation. For example, when $C_{ww}>50\%$, a spectrum formulation corresponding to $P_{ww}$ is selected for spectrum adaptation.

(13) When $C_{ww}$, $C_{nw}$ and $C_{cw}$ do not meet the rule condition in the above case (12), a spectrum formulation corresponding to $P_{sw}$ is selected for spectrum adaptation. It should be noted that when $C_{ww}$, $C_{nw}$ and $C_{cw}$ do not meet all the recognition rules in the above cases (1) to (12), a spectrum formulation corresponding to $P_{sw}$ is selected for spectrum adaptation.

According to the embodiments of the present application, by acquiring the color parameters of the illuminated object, the acquired basic color data are divided into units, and the color data of each unit is converted into HSB information. Meanwhile, judgment is performed by means of the spectrum matching rule library, and in conjunction with the HSB information, the spectrum formulation library, the formulation color block areas and other information provided in FIG. 6, a high-quality illumination spectrum formulation which uniquely accords with the illuminated object is ultimately obtained.

In a specific embodiment, the illuminated object may have a single color and a complex color. Sampling may involve dividing a color image of the illuminated object into meshes, i.e., dividing the color of each area in the image into small meshes. The color of each mesh is then statistically processed to obtain its corresponding HSB information. Spectrum matching is then performed on the HSB information of the illuminated object by means of the established spectrum formulation library and spectrum matching rule library to determine a unique and high-quality illumination spectrum formulation for the illuminated object.

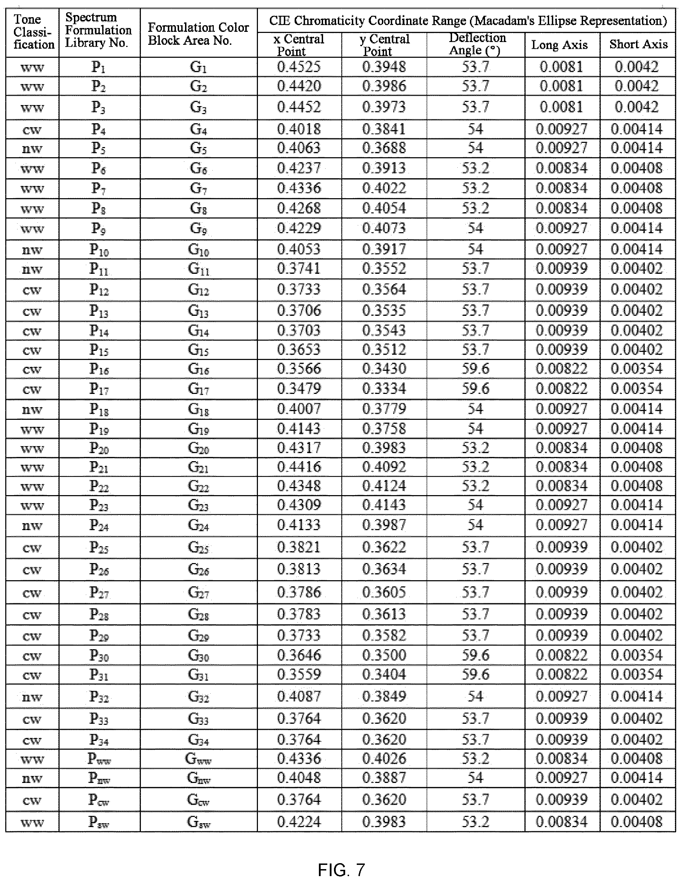

It should be noted that as shown in FIG. 7, in order to more clearly show the corresponding relationship between the spectrum formulation library and the formulation color block areas, the formulation color block areas corresponding to the spectrum formulation library adopt the representation form of coordinate values within the CIE chromaticity coordinate range, and the corresponding relationship between the spectrum formulation library and the formulation color block areas is constructed when the representation form of the formulation library is the combination of the central point of the chromaticity coordinates (x/y) and the Macadam's ellipse representation as a range for the classification of the color blocks of the formulation library, where the Macadam's ellipse representation contains x central points and y central points of the corresponding color block areas, as well as deflection angles, long axes and short axes of the areas. In the present application, spectrum matching can be performed on the HSB information of the illuminated object by means of the established spectrum formulation library and spectrum matching rule library, so as to determine a unique and high-quality illumination spectrum formulation for the illuminated object.

It should be noted that the spectrum matching rule library includes the matching for single-color objects and mixed-color objects.

In step S540, according to the spectrum matching rule library and the spectrum formulation library, spectrum matching is performed on the HSB information to determine an illumination spectrum formulation uniquely corresponding to the HSB information. After the constructed spectrum formulation library is acquired, the HSB information of the illuminated object and the spectrum formulation library are compared by means of operation according to the spectrum matching rule library, so that primary color information uniquely corresponding to the HSB information is determined. An illumination spectrum formulation uniquely corresponding to the primary color information is determined according to the spectrum formulation library. A formulation color block uniquely corresponding to the primary color information corresponding to the to-be-matched HSB information is determined according to the mapping relationship between the primary color information and the formulation color blocks. In the present application, spectrum matching can be performed on the HSB information of the illuminated object by means of the established spectrum formulation library and spectrum matching rule library, so as to determine a unique and high-quality illumination spectrum formulation for the illuminated object.

An embodiment of the present application further provides an illumination spectrum generation apparatus for executing the illumination spectrum generation method according to the above embodiments. The apparatus includes a primary color information acquisition module, a sample set construction module, a first parameter acquisition module, a second parameter acquisition module, a similarity fitting module, and a spectrum formulation generation module.

The primary color acquisition module is configured to acquire a preset HSB color model and perform, by means of the HSB color model, primary color classification on to-be-matched HSB information to determine primary color information uniquely corresponding to the HSB information. The sample set construction module is configured to obtain, according to the HSB color model, a plurality of color samples corresponding to the primary color information, and form a color sample set from the plurality of color samples. The first parameter acquisition module is configured to acquire, by means of a color sampling apparatus, sample parameters corresponding to the color sample set, where the sample parameters include a first spectral power distribution function corresponding to the color sample set. The second parameter acquisition module is configured to acquire a second spectral power distribution function under a fitting light source, and a preset regression function threshold. The similarity fitting module is configured to perform, by using a regression function, similarity fitting on the first spectral power distribution function and the second spectral power distribution function to obtain a similarity value. The spectrum formulation generation module is configured to perform, according to the regression function threshold, similarity judgment on the similarity value, so as to determine, from a preset spectrum formulation library, an illumination spectrum formulation uniquely corresponding to the primary color information.

The illumination spectrum generation apparatus according to the embodiment of the present application is used for executing the illumination spectrum generation method in the above embodiments, and its specific processing process is the same as the illumination spectrum generation method in the above embodiments, which will not be repeated here.

An embodiment of the present application further provides an illumination spectrum matching apparatus, which is used for executing the illumination spectrum matching method according to the above embodiments. The apparatus includes an HSB information acquisition module, a matching rule library acquisition module, a spectrum formulation library acquisition module, and a spectrum matching module.

The HSB information acquisition module is configured to perform color sampling on a to-be-matched illuminated object to obtain HSB information of the illuminated object. The matching rule library acquisition module is configured to acquire a spectrum matching rule library established according to color matching rules. The spectrum formulation library acquisition module is configured to acquire the spectrum formulation library in the illumination spectrum generation method according to any of the embodiments in the first aspect of the present application. The spectrum matching module is configured to perform, according to the spectrum matching rule library and the spectrum formulation library, spectrum matching on the HSB information to determine an illumination spectrum formulation uniquely corresponding to the HSB information. The illumination spectrum matching apparatus according to the embodiment of the present application is used for executing the illumination spectrum matching method in the above embodiments, and its specific processing process is the same as the illumination spectrum matching method in the above embodiments, which will not be repeated here.

An embodiment of the present application further provides a computer device, which includes a memory and a processor, where the memory is configured to store a computer program which, when executed by the processor, causes the processor to perform the illumination spectrum generation method in any of the embodiments in the first aspect of the present application or the illumination spectrum matching method in any of the embodiments in the second aspect of the present application.

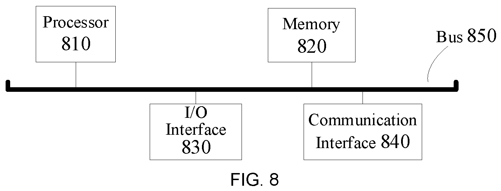

A hardware structure of the computer device will be described in detail with reference to FIG. 8. The computer device includes a processor 810, a memory 820, an input/output interface 830, a communication interface 840, and a bus 850.

The processor 810 may be implemented by a general-purpose CPU (Central Processing Unit), a microprocessor, an application specific integrated circuit (Application Specific Integrated Circuit, ASIC), or one or more integrated circuits, and is configured to execute a related program to implement the technical solution provided in the embodiments of the present application.

The memory 820 may be implemented in the form of a ROM (Read Only Memory), a static storage device, a dynamic storage device or a RAM (Random Access Memory). The memory 820 may store an operating system and other applications, and when the technical solution provided by the embodiments of the present specification is implemented by software or firmware, the related program codes are stored in the memory 820, and are called by the processor 810 to execute the illumination spectrum generation method or the illumination spectrum matching method according to the embodiments of the present application.

The input/output interface 830 is configured to input and output information.

The communication interface 840 is configured to implement the communication interaction between the device and other devices, and capable of implementing communication in a wired manner (e.g. USBs, network cables, etc.) or a wireless manner (e.g. a mobile network, WIFI, Bluetooth, etc.). The bus 850 transmits information between the various components (e.g. the processor 810, the memory 820, the input/output interface 830, and the communication interface 840) of the device.

The processor 810, the memory 820, the input/output interface 830 and the communication interface 840 are in communication connection with one another through the bus 850 inside the device.

An embodiment of the present application further provides a computer-readable storage medium, which stores a computer program, and when the computer program is executed by a computer, the computer is configured to execute the illumination spectrum generation method in any of the embodiments in the first aspect of the present application or the illumination spectrum matching method in any of the embodiments in the second aspect of the present application.

As a non-transitory computer-readable storage medium, the memory may be configured to store a non-transitory software program and a non-transitory computer-executable program. In addition, the memory may include a high-speed random access memory, and may also include a non-transitory memory, e.g. at least one disk storage device, flash memory device or other non-transitory solid-state storage devices. In some implementations, the memory optionally includes memories disposed remotely relative to the processor, and these remote memories may be connected to the processor through a network. Examples of the above network include, but are not limited to, the Internet, an intranet, a local area network, a mobile communication network, and combinations thereof.

The embodiments described in the embodiments of the present application are intended to explain the technical solutions of the embodiments of the present application more clearly rather than constitute a limitation to the technical solutions provided by the embodiments of the present application. As will be known by those of ordinary skills in the art, with the evolution of technology and the emergence of new application scenarios, the technical solutions provided by the embodiments of the present application are also applicable to similar technical problems.

It can be understood by those of ordinary skills in the art that the technical solutions illustrated in FIG. 1 to FIG. 5 do not constitute a limitation to the embodiments of the present application, and may include more or less steps than those illustrated, a combination of some steps, or different steps.

The apparatus embodiments described above are merely schematic in which the units illustrated as separate components may or may not be physically separated, that is, the units may be located in one place or distributed across a plurality of network units. Some or all of the modules may be selected according to actual needs to achieve the objective of the solutions of the present embodiment.

It can be understood by those of ordinary skills in the art that all or some of the steps in the methods and the functional modules/units in the system and device disclosed above may be implemented as software, firmware, hardware and their appropriate combinations.

The terms "first", "second", "third", "fourth" and the like (if present) in the specification of the present application and the above accompanying drawings are used to distinguish similar objects, and are not necessarily used to describe a specific order or sequence. It should be understood that the data used in this way can be interchanged under appropriate circumstances, so that the embodiments of the present application described herein can be implemented in other orders than those illustrated or described herein. Furthermore, the terms "include/comprise", "has" and any variations thereof are intended to cover non-exclusive inclusion. For example, processes, methods, systems, products or devices that include a series of steps or units are not necessarily limited to those steps or units explicitly listed, but may include other steps or units not explicitly listed or inherent to these processes, methods, products or devices.

It should be understood that in the present application, "at least one (item)" refers to one or more, and "a plurality of" refers to two or more. "And/or" is used to describe the association relationship between associated objects, indicating that there may be three relationships. For example, "A and/or B" may indicate that only A is present, only B is present, and both A and B are present, where A and B may be singular or plural. The character "/" generally indicates that the associated objects at both sides are in an "or" relationship. "At least one of the following (items)" or a similar expression thereof refers to any combination of these items, including a single item or any combination of a plurality of items. For example, at least one of a, b or c may indicates a, b, c, "a and b", "a and c", "b and c", or "a, b and c", where a, b and c may be singular or plural.

In several embodiments provided by the present application, it should be understood that the disclosed apparatuses and methods may be implemented in other ways. For example, the above apparatus embodiments are merely illustrative. For example, the classification of units is only one type of logical function classification. Other classification methods may be implemented in practice, for example, a plurality of units or components may be combined or integrated into another system, or some features may be omitted, or not executed. In addition, mutual coupling or direct coupling or communication connection shown or discussed may be indirect coupling or communication connection through some interfaces, apparatuses or units, or may be in electrical, mechanical or other forms.

The units described as separate parts may or may not be physically separated, and parts displayed as units may or may not be physical units, that is, they may be located at one position or distributed on multiple network units. Some or all of the units may be selected according to actual needs to achieve the objective of the solutions of the present embodiment.

In addition, various functional units in the embodiments of the present application may be integrated into one processing unit, or each unit may exist alone physically, or two or more units may be integrated into one unit. The above integrated units may be implemented in the form of hardware or in the form of functional software units.

If the integrated units are implemented in the form of the functional software units and sold or used as separate products, the integrated units may be stored in a computer-readable storage medium. Based on this understanding, the technical solutions of the present application or the parts that contribute to the prior art or all or part of the technical solution may be embodied in the form of a software product in essence. The computer software product is stored in a storage medium, and includes multiple instructions to make a computer device (e.g. a personal computer, a server, a network device, etc.) execute all or part of the steps of the method in various embodiments of the present application. The above storage medium includes: a USB flash disk, a mobile hard disk, a read-only memory (ROM), a random access memory (RAM), a magnetic disk, an optical disk, or various other media capable of storing the program.

The preferred embodiments among the embodiments of the present application have been described above with reference to the accompanying drawings, which is not intended to limit the protection scope of the embodiments of the present application. Any modification, equivalent substitution and improvement which are made by those of ordinary skills in the art without departing from the scope and essence of the embodiments of the present application shall fall within the protection scope of the embodiments of the present application.

**Claims**

1.   An illumination spectrum generation method, comprising:

acquiring a preset HSB color model, and performing, by means of the HSB color model, primary color classification on to-be-matched HSB information to determine primary color information uniquely corresponding to the HSB information;

obtaining, according to the HSB color model, a plurality of color samples corresponding to the primary color information, and forming a color sample set from the plurality of color samples;

collecting, by means of a color sampling apparatus, sample parameters corresponding to the color sample set, wherein the sample parameters comprise a first spectral power distribution function corresponding to the color sample set;

acquiring a second spectral power distribution function under a fitting light source, and a preset regression function threshold;

performing, by using a regression function, similarity fitting on the first spectral power distribution function and the second spectral power distribution function to obtain a similarity value; and

performing, according to the regression function threshold, similarity judgment on the similarity value, so as to determine, from a preset spectrum formulation library, an illumination spectrum formulation uniquely corresponding to the primary color information.

2.   The illumination spectrum generation method according to claim 1, further comprising:

acquiring a mapping relationship between the primary color information and formulation color blocks in the spectrum formulation library; and

determining, according to the mapping relationship between the primary color information and the formulation color blocks, a formulation color block uniquely corresponding to the primary color information corresponding to the HSB information.

3.   The illumination spectrum generation method according to claim 1, wherein the performing, by using a regression function, similarity fitting on the first spectral power distribution function and the second spectral power distribution function to obtain a similarity value comprises:

acquiring the first spectral power distribution function and first hue information corresponding to the first spectral power distribution function;

acquiring the second spectral power distribution function and second hue information corresponding to the second spectral power distribution function;

performing hue judgment on the first hue information and the second hue information to obtain a hue comparison result;

establishing a functional relationship between the first spectral power distribution function and the second spectral power distribution function to obtain fitting ratio information of the fitting light source;

adjusting, according to the hue comparison result, the functional relationship to update the fitting ratio information; and

performing, by using a regression function, similarity fitting on the first spectral power distribution function and the second spectral power distribution function to obtain a similarity value.

4. The illumination spectrum generation method according to claim 3, wherein the performing, according to the regression function threshold, similarity judgment on the similarity value, so as to determine, from a preset spectrum formulation library, an illumination spectrum formulation uniquely corresponding to the primary color information comprises:
performing similarity judgment on the regression function threshold and the similarity value, and determining, if the similarity value is greater than the regression function threshold, an illumination spectrum formulation uniquely corresponding to the primary color information from the preset spectrum formulation library according to the fitting ratio information.

5. The illumination spectrum generation method according to any of claim 1 to 4, wherein the obtaining, according to the HSB color model, a plurality of color samples corresponding to the primary color information, and forming a color sample set from the plurality of color samples comprises:

performing, according to the HSB color model, tone classification on the primary color information to obtain a primary color tone uniquely corresponding to the primary color information, wherein the primary color tone comprises any of a cold tone, a neutral tone, or a warm tone;
making, according to the primary color tone corresponding to the primary color information, a plurality of color samples corresponding to the primary color information, wherein the color samples are each made of different materials and have different reflection coefficients; and
forming a color sample set from the plurality of color samples.

6. An illumination spectrum matching method, comprising:

performing color sampling on a to-be-matched illuminated object to obtain HSB information of the illuminated object;
acquiring a spectrum matching rule library established according to color matching rules;
acquiring the spectrum formulation library in the illumination spectrum generation method according to any of claims 1 to 5; and
performing, according to the spectrum matching rule library and the spectrum formulation library, spectrum matching on the HSB information to determine an illumination spectrum formulation uniquely corresponding to the HSB information.

7. An illumination spectrum generation apparatus, comprising:

a primary color acquisition module, configured to acquire a preset HSB color model and perform, by means of the HSB color model, primary color classification on to-be-matched HSB information to determine primary color information uniquely corresponding to the HSB information;
a sample set construction module, configured to obtain, according to the HSB color model, a plurality of color samples corresponding to the primary color information, and form a color sample set from the plurality of color samples;
a first parameter acquisition module, configured to acquire, by means of a color sampling apparatus, sample parameters corresponding to the color sample set, wherein the sample parameters comprise a first spectral power distribution function corresponding to the color sample set;
a second parameter acquisition module, configured to acquire a second spectral power distribution function under a fitting light source, and a preset regression function threshold;
a similarity fitting module, configured to perform, by using a regression function, similarity fitting on the first spectral power distribution function and the second spectral power distribution function to obtain a similarity value; and
a spectrum formulation generation module, configured to perform, according to the regression function threshold, similarity judgment on the similarity value, so as to determine, from a preset spectrum formulation library, an illumination spectrum formulation uniquely corresponding to the primary color information.

8. An illumination spectrum matching apparatus, comprising:

an HSB information acquisition module, configured to perform color sampling on a to-be-matched illuminated object to obtain HSB information of the illuminated object;

a matching rule library acquisition module, configured to acquire a spectrum matching rule library established according to color matching rules;

a spectrum formulation library acquisition module, configured to acquire the spectrum formulation library in the illumination spectrum generation method according to any of claims 1 to 5; and

a spectrum matching module, configured to perform, according to the spectrum matching rule library and the spectrum formulation library, spectrum matching on the HSB information to determine an illumination spectrum formulation uniquely corresponding to the HSB information.

9. A computer device, comprising a memory and a processor, wherein the memory is configured to store a computer program which, when executed by the processor, causes the processor to perform:

the illumination spectrum generation method according to any of claims 1 to 5; or
the illumination spectrum matching method according to claim 6.

10. A computer-readable storage medium, storing a computer program which, when executed by a computer, causes the computer to perform:

the illumination spectrum generation method according to any of claims 1 to 5; or
the illumination spectrum matching method according to claim 6.

Acquire a preset HSB color model, and perform, by means of the HSB color model, primary color classification on to-be-matched HSB information to determine primary color information uniquely corresponding to the HSB information — S110

Obtain, according to the HSB color model, a plurality of color samples corresponding to the primary color information, and form a color sample set from the plurality of color samples — S120

Acquire, by means of a color sampling apparatus, sample parameters corresponding to the color sample set, where the sample parameters include a first spectral power distribution function corresponding to the color sample set — S130

Acquire a second spectral power distribution function under a fitting light source, and a preset regression function threshold — S140

Perform, by using a regression function, similarity fitting on the first spectral power distribution function and the second spectral power distribution function to obtain a similarity value — S150

Perform, according to the regression function threshold, similarity judgment on the similarity value, so as to determine, from a preset spectrum formulation library, an illumination spectrum formulation uniquely corresponding to the primary color information — S160

FIG. 1

Acquire a mapping relationship between primary color information and formulation color blocks in the spectrum formulation library — S210

Determine, according to the mapping relationship between the primary color information and the formulation color blocks, a formulation color block uniquely corresponding to the primary color information corresponding to the HSB information — S220

FIG. 2

Acquire the first spectral power distribution function and first hue information corresponding to the first spectral power distribution function ⟋⟍ S310

Acquire the second spectral power distribution function and second hue information corresponding to the second spectral power distribution function ⟋⟍ S320

Perform hue judgment on the first hue information and the second hue information to obtain a hue comparison result ⟋⟍ S330

Establish a functional relationship between the first spectral power distribution function and the second spectral power distribution function to obtain fitting ratio information of the fitting light source ⟋⟍ S340

Adjust, according to the hue comparison result, the functional relationship to update the fitting ratio information ⟋⟍ S350

Perform, by using a regression function, similarity fitting on the first spectral power distribution function and the second spectral power distribution function to obtain a similarity value ⟋⟍ S360

FIG. 3

Perform, according to the HSB color model, tone classification on the primary color information to obtain a primary color tone uniquely corresponding to the primary color information, where the primary color tone includes any of a cold tone, a neutral tone, or a warm tone — S410

Make, according to the primary color tone corresponding to the primary color information, a plurality of color samples corresponding to the primary color information, where the color samples are each made of different materials and have different reflection coefficients — S420

Form a color sample set from the plurality of color samples — S430

FIG. 4

Perform color sampling on a to-be-matched illuminated object to obtain HSB information of the illuminated object — S510

Acquire a spectrum matching rule library established according to color matching rules — S520

Acquire a spectrum formulation library in the illumination spectrum generation method according to any of the embodiments in the first aspect of the present application — S530

Perform, according to the spectrum matching rule library and the spectrum formulation library, spectrum matching on the HSB information to determine an illumination spectrum formulation uniquely corresponding to the HSB information — S540

FIG. 5

| No. | HSB Information Data Range | | | Primary Color No. | Tone Classi-fication | Spectrum Formulation Library No. | Formulation Color Block Area No. | Primary Color Priority |
|---|---|---|---|---|---|---|---|---|
| | H Value Range | S Value Range | B Value Range | | | | | |
| 1 | 0≤H≤10 | 70≤S≤100 | 30≤B≤50 | $S_1$ | ww | $P_1$ | $G_1$ | 21 |
| 2 | 20≤H≤30 | 30≤S≤50 | 50≤B≤100 | $S_2$ | ww | $P_2$ | $G_2$ | 20 |
| 3 | 10≤H≤20 | 70≤S≤100 | 30≤B≤50 | $S_3$ | ww | $P_3$ | $G_3$ | 19 |
| 4 | 30≤H≤50 | 5≤S≤15 | 85≤B≤95 | $S_4$ | cw | $P_4$ | $G_4$ | 2 |
| 5 | 343≤H<20 | 40≤S≤100 | 40≤B≤100 | $S_5$ | nw | $P_5$ | $G_5$ | 11 |
| 6 | 20≤H<30 | 40≤S≤100 | 40≤B≤100 | $S_6$ | ww | $P_6$ | $G_6$ | 9 |
| 7 | 30≤H<45 | 40≤S≤100 | 40≤B≤100 | $S_7$ | ww | $P_7$ | $G_7$ | 3 |
| 8 | 45≤H<58 | 40≤S≤100 | 40≤B≤100 | $S_8$ | ww | $P_8$ | $G_8$ | 5 |
| 9 | 58≤H<68 | 40≤S≤100 | 40≤B≤100 | $S_9$ | ww | $P_9$ | $G_9$ | 7 |
| 10 | 68≤H<89 | 40≤S≤100 | 40≤B≤100 | $S_{10}$ | nw | $P_{10}$ | $G_{10}$ | 17 |
| 11 | 89≤H<141 | 40≤S≤100 | 40≤B≤100 | $S_{11}$ | nw | $P_{11}$ | $G_{11}$ | 15 |
| 12 | 141≤H<165 | 40≤S≤100 | 40≤B≤100 | $S_{12}$ | cw | $P_{12}$ | $G_{12}$ | 22 |
| 13 | 165≤H<185 | 40≤S≤100 | 40≤B≤100 | $S_{13}$ | cw | $P_{13}$ | $G_{13}$ | 24 |
| 14 | 185≤H<211 | 40≤S≤100 | 40≤B≤100 | $S_{14}$ | cw | $P_{14}$ | $G_{14}$ | 26 |
| 15 | 211≤H<240 | 40≤S≤100 | 40≤B≤100 | $S_{15}$ | cw | $P_{15}$ | $G_{15}$ | 28 |
| 16 | 240≤H<260 | 40≤S≤100 | 40≤B≤100 | $S_{16}$ | cw | $P_{16}$ | $G_{16}$ | 30 |
| 17 | 260≤H<288 | 40≤S≤100 | 40≤B≤100 | $S_{17}$ | cw | $P_{17}$ | $G_{17}$ | 32 |
| 18 | 288≤H<343 | 40≤S≤100 | 40≤B≤100 | $S_{18}$ | nw | $P_{18}$ | $G_{18}$ | 12 |
| 19 | 343≤H<20 | 10≤S<40 | 40≤B≤100 | $S_{19}$ | ww | $P_{19}$ | $G_{19}$ | 13 |
| 20 | 20≤H<30 | 10≤S<40 | 40≤B≤100 | $S_{20}$ | ww | $P_{20}$ | $G_{20}$ | 10 |
| 21 | 30≤H<45 | 10≤S<40 | 40≤B≤100 | $S_{21}$ | ww | $P_{21}$ | $G_{21}$ | 4 |
| 22 | 45≤H<58 | 10≤S<40 | 40≤B≤100 | $S_{22}$ | ww | $P_{22}$ | $G_{22}$ | 6 |
| 23 | 58≤H<68 | 10≤S<40 | 40≤B≤100 | $S_{23}$ | ww | $P_{23}$ | $G_{23}$ | 8 |
| 24 | 68≤H<89 | 10≤S<40 | 40≤B≤100 | $S_{24}$ | nw | $P_{24}$ | $G_{24}$ | 18 |
| 25 | 89≤H<141 | 10≤S<40 | 40≤B≤100 | $S_{25}$ | cw | $P_{25}$ | $G_{25}$ | 16 |
| 26 | 141≤H<165 | 10≤S<40 | 40≤B≤100 | $S_{26}$ | cw | $P_{26}$ | $G_{26}$ | 23 |
| 27 | 165≤H<185 | 10≤S<40 | 40≤B≤100 | $S_{27}$ | cw | $P_{27}$ | $G_{27}$ | 25 |
| 28 | 185≤H<211 | 10≤S<40 | 40≤B≤100 | $S_{28}$ | cw | $P_{28}$ | $G_{28}$ | 27 |
| 29 | 211≤H<240 | 10≤S<40 | 40≤B≤100 | $S_{29}$ | cw | $P_{29}$ | $G_{29}$ | 29 |
| 30 | 240≤H<260 | 10≤S<40 | 40≤B≤100 | $S_{30}$ | cw | $P_{30}$ | $G_{30}$ | 31 |
| 31 | 260≤H<288 | 10≤S<40 | 40≤B≤100 | $S_{31}$ | cw | $P_{31}$ | $G_{31}$ | 33 |
| 32 | 288≤H<343 | 10≤S<40 | 40≤B≤100 | $S_{32}$ | nw | $P_{32}$ | $G_{32}$ | 14 |
| 33 | 0≤H≤360 | 0≤S≤100 | B≤40 | $S_{33}$ | cw | $P_{33}$ | $G_{33}$ | 34 |
| 34 | 0≤H≤360 | 0≤S<10 | 40≤B≤100 | $S_{34}$ | cw | $P_{34}$ | $G_{34}$ | 1 |
| 35 | Warm tone | | | $S_{ww}$ | ww | $P_{ww}$ | $G_{ww}$ | |
| 36 | Neutral tone | | | $S_{nw}$ | nw | $P_{nw}$ | $G_{nw}$ | |
| 37 | Cold tone | | | $S_{cw}$ | cw | $P_{cw}$ | $G_{cw}$ | |
| 38 | Natural tone | | | $S_{sw}$ | sw | $P_{sw}$ | $G_{sw}$ | |

FIG. 6

| Tone Classi-fication | Spectrum Formulation Library No. | Formulation Color Block Area No. | CIE Chromaticity Coordinate Range (Macadam's Ellipse Representation) | | | | |
|---|---|---|---|---|---|---|---|
| | | | x Central Point | y Central Point | Deflection Angle (°) | Long Axis | Short Axis |
| ww | $P_1$ | $G_1$ | 0.4525 | 0.3948 | 53.7 | 0.0081 | 0.0042 |
| ww | $P_2$ | $G_2$ | 0.4420 | 0.3986 | 53.7 | 0.0081 | 0.0042 |
| ww | $P_3$ | $G_3$ | 0.4452 | 0.3973 | 53.7 | 0.0081 | 0.0042 |
| cw | $P_4$ | $G_4$ | 0.4018 | 0.3841 | 54 | 0.00927 | 0.00414 |
| nw | $P_5$ | $G_5$ | 0.4063 | 0.3688 | 54 | 0.00927 | 0.00414 |
| ww | $P_6$ | $G_6$ | 0.4237 | 0.3913 | 53.2 | 0.00834 | 0.00408 |
| ww | $P_7$ | $G_7$ | 0.4336 | 0.4022 | 53.2 | 0.00834 | 0.00408 |
| ww | $P_8$ | $G_8$ | 0.4268 | 0.4054 | 53.2 | 0.00834 | 0.00408 |
| ww | $P_9$ | $G_9$ | 0.4229 | 0.4073 | 54 | 0.00927 | 0.00414 |
| nw | $P_{10}$ | $G_{10}$ | 0.4053 | 0.3917 | 54 | 0.00927 | 0.00414 |
| nw | $P_{11}$ | $G_{11}$ | 0.3741 | 0.3552 | 53.7 | 0.00939 | 0.00402 |
| cw | $P_{12}$ | $G_{12}$ | 0.3733 | 0.3564 | 53.7 | 0.00939 | 0.00402 |
| cw | $P_{13}$ | $G_{13}$ | 0.3706 | 0.3535 | 53.7 | 0.00939 | 0.00402 |
| cw | $P_{14}$ | $G_{14}$ | 0.3703 | 0.3543 | 53.7 | 0.00939 | 0.00402 |
| cw | $P_{15}$ | $G_{15}$ | 0.3653 | 0.3512 | 53.7 | 0.00939 | 0.00402 |
| cw | $P_{16}$ | $G_{16}$ | 0.3566 | 0.3430 | 59.6 | 0.00822 | 0.00354 |
| cw | $P_{17}$ | $G_{17}$ | 0.3479 | 0.3334 | 59.6 | 0.00822 | 0.00354 |
| nw | $P_{18}$ | $G_{18}$ | 0.4007 | 0.3779 | 54 | 0.00927 | 0.00414 |
| ww | $P_{19}$ | $G_{19}$ | 0.4143 | 0.3758 | 54 | 0.00927 | 0.00414 |
| ww | $P_{20}$ | $G_{20}$ | 0.4317 | 0.3983 | 53.2 | 0.00834 | 0.00408 |
| ww | $P_{21}$ | $G_{21}$ | 0.4416 | 0.4092 | 53.2 | 0.00834 | 0.00408 |
| ww | $P_{22}$ | $G_{22}$ | 0.4348 | 0.4124 | 53.2 | 0.00834 | 0.00408 |
| ww | $P_{23}$ | $G_{23}$ | 0.4309 | 0.4143 | 54 | 0.00927 | 0.00414 |
| nw | $P_{24}$ | $G_{24}$ | 0.4133 | 0.3987 | 54 | 0.00927 | 0.00414 |
| cw | $P_{25}$ | $G_{25}$ | 0.3821 | 0.3622 | 53.7 | 0.00939 | 0.00402 |
| cw | $P_{26}$ | $G_{26}$ | 0.3813 | 0.3634 | 53.7 | 0.00939 | 0.00402 |
| cw | $P_{27}$ | $G_{27}$ | 0.3786 | 0.3605 | 53.7 | 0.00939 | 0.00402 |
| cw | $P_{28}$ | $G_{28}$ | 0.3783 | 0.3613 | 53.7 | 0.00939 | 0.00402 |
| cw | $P_{29}$ | $G_{29}$ | 0.3733 | 0.3582 | 53.7 | 0.00939 | 0.00402 |
| cw | $P_{30}$ | $G_{30}$ | 0.3646 | 0.3500 | 59.6 | 0.00822 | 0.00354 |
| cw | $P_{31}$ | $G_{31}$ | 0.3559 | 0.3404 | 59.6 | 0.00822 | 0.00354 |
| nw | $P_{32}$ | $G_{32}$ | 0.4087 | 0.3849 | 54 | 0.00927 | 0.00414 |
| cw | $P_{33}$ | $G_{33}$ | 0.3764 | 0.3620 | 53.7 | 0.00939 | 0.00402 |
| cw | $P_{34}$ | $G_{34}$ | 0.3764 | 0.3620 | 53.7 | 0.00939 | 0.00402 |
| ww | $P_{ww}$ | $G_{ww}$ | 0.4336 | 0.4026 | 53.2 | 0.00834 | 0.00408 |
| nw | $P_{nw}$ | $G_{nw}$ | 0.4048 | 0.3887 | 54 | 0.00927 | 0.00414 |
| cw | $P_{cw}$ | $G_{cw}$ | 0.3764 | 0.3620 | 53.7 | 0.00939 | 0.00402 |
| ww | $P_{sw}$ | $G_{sw}$ | 0.4224 | 0.3983 | 53.2 | 0.00834 | 0.00408 |

FIG. 7

23

Processor
810

Memory
820

Bus 850

I/O
Interface
830

Communication
Interface 840

FIG. 8

## INTERNATIONAL SEARCH REPORT

International application No.

**PCT/CN2023/074902**

### A. CLASSIFICATION OF SUBJECT MATTER

G03B27/16(2006.01)i

According to International Patent Classification (IPC) or to both national classification and IPC

### B. FIELDS SEARCHED

Minimum documentation searched (classification system followed by classification symbols)

IPC: G03B,G06K,G06F

Documentation searched other than minimum documentation to the extent that such documents are included in the fields searched

Electronic data base consulted during the international search (name of data base and, where practicable, search terms used)

ENTXTC, CNTXT, ENTXT, CNKI, DWPI, IEEE: 照明, 光谱, 匹配, 样品, 基色, 功率, 分布, 回归, 函数, 相似度, 库, illumination, spectrum, match, sample, primary, color, power, distribution, regression, function, similarity, library

### C. DOCUMENTS CONSIDERED TO BE RELEVANT

| Category* | Citation of document, with indication, where appropriate, of the relevant passages | Relevant to claim No. |
|---|---|---|
| PX | CN 114742137 A (ZHIMOUJI (SHENZHEN) TECHNOLOGY CO., LTD.) 12 July 2022 (2022-07-12)<br>claims 1-10, and description, paragraphs 2-178 | 1-10 |
| A | CN 110081971 A (GUANGDONG EPCOL LIGHTING CO., LTD.) 02 August 2019 (2019-08-02)<br>entire document | 1-10 |
| A | CN 109673082 A (UNIVERSITY OF SCIENCE AND TECHNOLOGY OF CHINA) 23 April 2019 (2019-04-23)<br>entire document | 1-10 |
| A | US 2021251064 A1 (ELECTRONIC THEATRE CONTROLS, INC.) 12 August 2021 (2021-08-12)<br>entire document | 1-10 |
| A | CN 113196288 A (PCMS HOLDINGS INC.) 30 July 2021 (2021-07-30)<br>entire document | 1-10 |

☐ Further documents are listed in the continuation of Box C.   ☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **12 May 2023** | **15 May 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/074902**

| Patent document cited in search report | | | Publication date (day/month/year) | Patent family member(s) | | | Publication date (day/month/year) |
|---|---|---|---|---|---|---|---|
| CN | 114742137 | A | 12 July 2022 | None | | | |
| CN | 110081971 | A | 02 August 2019 | CN | 110081971 | B | 28 May 2021 |
| CN | 109673082 | A | 23 April 2019 | CN | 109673082 | B | 05 May 2020 |
| US | 2021251064 | A1 | 12 August 2021 | US | 11240898 | B2 | 01 February 2022 |
| | | | | GB | 202101900 | D0 | 31 March 2021 |
| | | | | GB | 2593966 | A | 13 October 2021 |
| | | | | US | 2022151044 | A1 | 12 May 2022 |
| | | | | DE | 102021103286 | A1 | 12 August 2021 |
| CN | 113196288 | A | 30 July 2021 | KR | 20210106990 | A | 31 August 2021 |
| | | | | US | 2022130131 | A1 | 28 April 2022 |
| | | | | WO | 2020112560 | A1 | 04 June 2020 |

Form PCT/ISA/210 (patent family annex) (July 2022)